## Europäisches Patentamt

## European Patent Office

## Office européen des brevets

(11) Veröffentlichungsnummer: **0 205 004**
**B1**

(12) **EUROPÄISCHE PATENTSCHRIFT**

(45) Veröffentlichungstag der Patentschrift:
**23.08.89**

(21) Anmeldenummer: **86106934.2**

(22) Anmeldetag: **22.05.86**

(51) Int. Cl.⁴: **F16B 39/24**

(54) Mitverspanntes federndes oder nicht-federndes Element.

(30) Priorität: **31.05.85 DE 3519610**

(43) Veröffentlichungstag der Anmeldung:
**17.12.86 Patentblatt 86/51**

(45) Bekanntmachung des Hinweises auf die Patenterteilung:
**23.08.89 Patentblatt 89/34**

(84) Benannte Vertragsstaaten:
**AT BE CH DE FR GB IT LI NL SE**

(56) Entgegenhaltungen:
**AT-B- 5 578**
**DE-C- 230 153**
**DE-C- 436 263**
**DE-C- 3 042 388**
**GB-A- 2 130 328**
**US-A- 3 752 203**
**US-A- 4 290 469**
**US-A- 4 309 139**

(73) Patentinhaber: **Vossloh-Werke GmbH, Postfach 1860,
D-5980 Werdohl(DE)**

(72) Erfinder: **Overhues, Egon, Haller Weg 61,
D-5982 Neuenrade(DE)**

(74) Vertreter: **Hoffmann, Klaus, Dr. rer. nat. et al, Hoffmann.
Eitle & Partner Patentanwälte
Postfach 81 04 20 Arabellastrasse 4,
D-8000 München 81(DE)**

## Beschreibung

Die vorliegende Erfindung bezieht sich auf ein mitverspanntes federndes oder nicht-federndes scheiben- oder ringförmiges Element, mit auf jeder Seitenfläche angeordneten, vom Innen- bis zum Aussenrand verlaufenden wallartigen Erhebungen und zwischen diesen liegenden Vertiefungen, wobei die Erhebungen eine plateauartige Oberseite aufweisen, deren Plateaufläche im Querschnitt in Umfangsrichtung des Elementes zu Bildung von im Bereich der Plateauränder liegenden Kanten konkav gewölbt ist, und die Kanten als Schabkanten ausgebildet sind.

Bei als Federringe ausgebildeten Elementen dieser Art (vgl. DE-C 30 42 388) kreuzen sich die wallartigen Erhebungen gitterartig und schliessen gegenüber einer Tangente an den Ring einen Winkel von deutlich weniger oder mehr als 90° ein.

Im Vergleich mit genau radial verlaufenden wallartigen Erhebungen bekannter Federringkonstruktionen ergeben sich dadurch bei gleicher Breite der Erhebungen längere Kantenlängen in günstigerer Anordnung und damit ein erhöhter Widerstand.

Durch die Ausbildung der Kanten als Schabkanten wiederum werden die bei bekannten Federringkonstruktionen häufig vorgesehenen Schneidkanten vermieden. Diese Schneidkanten können bekanntlich beim Anziehen mehr oder minder flachgequetscht oder abgebrochen werden und somit keine Sicherungswirkung mehr entfalten. Im Falle des Einsatzes von Schabkanten dagegen können deren wirksame Kantenränder aufgrund der geschützten Anordnung im Bereich der Plateauränder beim Anziehvorgang weder flachgequetscht noch abgestumpft werden. Dies hat zur Folge, dass die Schärfe und Wirksamkeit der Schabkanten durch den Anziehvorgang nicht beeinträchtigt wird. Auch wird beim Anziehvorgang die Gegenfläche der Schraubverbindung durch die Schabkanten sauber geschabt, so dass sie einen erhöhten Reibwert gegen Losdrehen erhält.

Im Rahmen von Vibrationsprüfungen wurde nun festgestellt, dass Federringe dieser Art beim Einsatz mit öl- und wachsbeschichteten Gegenlagen eine etwas reduzierte Sicherungswirkung aufweisen.

Aufgabe der vorliegenden Erfindung ist es, ein neuartiges, mitverspanntes, federndes oder nicht-federndes scheiben- oder ringförmiges Element zu schaffen, das unter Ausnutzung des aus der DE-C 3 042 388 bekannten Sicherungsprinzips beim Einsatz im Zusammenwirken mit öl- bzw. wachsbeschichteten Gegenlagen eine verbesserte Sicherungswirkung erbringt.

Diese Aufgabe wird erfindungsgemäss dadurch gelöst, dass sich die wallartigen Erhebungen in radialer Richtung zick-zack-förmig vom Innenrand zum Aussenrand jeder Seitenfläche erstrecken und die zwischen den Erhebungen liegenden Vertiefungen jeweils als zick-zack-förmig verlaufende durchgehende Rinnen ausgebildet sind, die im Bereich des Innen- und Aussenrandes offen sind.

Der Erfindung liegt folgende Erkenntnis zugrunde:

Aufgrund der gitterartigen Anordnung der sich kreuzenden Erhebungen bei Federringen der in der DE-C 3 042 388 beschriebenen Art bilden sich zwischen den Erhebungen in der Draufsicht im mittleren Bereich rautenförmig und im Randbereich des Federringes dreickige Vertiefungen aus. Während die im Randbereich angeordneten dreieckigen Vertiefungen jeweils zur Umfangs- bzw. Innenfläche des Federringes offen sind, bilden die im mittleren Bereich liegenden rautenförmigen Vertiefungen geschlossene Mulden, die sich beim Einsatz von öl- bzw. wachsbeschichteten Gegenlagen mit Öl oder Wachs füllen. Beim Anziehvorgang der Schraubenverbindung baut sich nun in den mit Öl bzw. Wachs gefüllten Vertiefungen bzw. Mulden ein hydrostatischer Druck auf, unter dessen Einfluss die Schabkanten nicht vollständig zur Wirkung kommen. Dieser hydrostatische Druck kann sich zwar bei Einwirkung von Querkräften langsam abbauen. Da der Druckabbau jedoch ausschliesslich über die Trennflächen erfolgt, wird dabei zwangsläufig Öl bzw. Wachs aus den Vertiefungen bzw. Mulden heraus zwischen die Schabkanten gepresst, wodurch die Sicherungswirkung in einem solchen Einsatzfall etwas reduziert wird.

Der Erfindung liegt der Gedanke zugrunde, unter Beibehaltung der Vorteile der Schabkanten in Verbindung mit deren spezieller Anordnung die Konstruktion derart zu gestalten, dass keine geschlossenen Vertiefungen mehr vorhanden sind. Vielmehr sollen die Vertiefungen in Form von durchgehenden Rinnen ausgebildet sein, die im Bereich der Ränder der Seitenflächen offen sind. Dadurch kann sich in den Vertiefungen beim Anziehvorgang der Schraubverbindung kein hydrostatischer Druck aufbauen, da eine Ausgleichsmöglichkeit zu den gegenüber der Aussenatmosphäre offenen Rinnenenden hin besteht. Die Rinnen haben somit eine gewisse "Drainagewirkung", so dass Konstruktionen der erfindungsgemässen Bauart auch beim Einsatz von öl- bzw. wachsbeschichteten Gegenlagen eine erhöhte Sicherungswirkung erbringen, wie im Rahmen von Vibrationsprüfungen nachgewiesen werden konnte.

Die Öffnung der Rinnen im Bereich des Innen- und Aussenrandes des Federringes kann grundsätzlich in verschiedenster Weise gelöst werden. Eine besonders einfache Ausgestaltung ergibt sich jedoch, wenn die zick-zack-förmig verlaufenden Rinnen im Bereich des Aussenrandes direkt in die Umfangsfläche und im Bereich des Innenrandes direkt in die Innenfläche des Federringes hinein auslaufen.

Die Breite der Rinnen kann entsprechend dem jeweiligen Verwendungszweck unterschiedlich gewählt werden. Vorteilhafte Ergebnisse werden erzielt, wenn die Breite der wallartigen Erhebungen - in Umfangsrichtung zwischen den Kanten gemessen - dem 0,5- bis 3-fachen der Breite der Rinnen entspricht.

Besonders vorteilhafte Ergebnisse werden erzielt, wenn - gemessen zwischen den Kanten - die Breite der wallartigen Erhebungen der Breite der Rinnen entspricht.

Vorteilhaft ist es, den Querschnitt der Rinnen etwa V-förmig auszubilden. Eine derartige Querschnittsform eignet sich in besonderer Weise für eine wirtschaftliche Fertigung.

Im folgenden ist zum besseren Verständnis und zur weiteren Erläuterung der Erfindung ein Ausführungsbeispiel unter Bezugnahme auf die beigefügten Zeichnungen näher beschrieben.

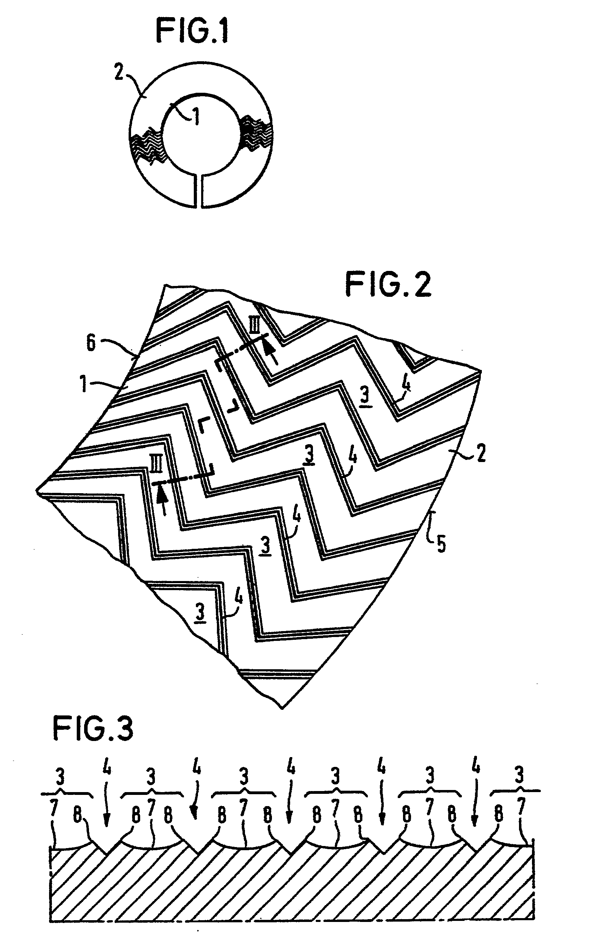

Fig. 1 zeigt ein Element der erfindungsgemässen Art in Form einer Scheibe in einer Gesamtansicht, wobei die vom Innen- bis zum Aussenrand verlaufenden wallartigen Erhebungen und die zwischen diesen liegenden rinnenartigen Vertiefungen nur auf einem Teil der Seitenfläche dargestellt sind,

Fig. 2 zeigt in stark vergrössertem Massstab ebenfalls in einer Draufsicht einen Abschnitt der Scheibe gemäss Fig. 1, und

Fig. 3 zeigt einen Schnitt in der Ebene III-III der Fig. 2, in dem jedoch nur eine der Seitenflächen der Scheibe dargetellt ist.

Die in den Figuren dargestellte Scheibe ist auf jeder ihrer Seitenflächen mit in radialer Richtung zick-zack-förmig vom Innenrand 1 bis zum Aussenrand 2 verlaufenden wallartigen Erhebungen 3 ausgestattet. Zwischen den wallartigen Erhebungen 3 liegen ebenfalls zick-zack-förmig verlaufende Vertiefungen, die als durchgehende Rinnen 4 ausgebildet sind, welche im vorliegenden Ausführungsbeispiel im Bereich des Aussenrandes 2 in die Umfangsfläche 5 und im Bereich des Innenrandes 1 in die Innenfläche 6 des Federringes hinein auslaufen.

Die wallartigen Erhebungen 3 weisen eine plateauartige Oberfläche 7 auf, welche im Querschnitt - in Umfangsrichtung der Scheibe betrachtet - zur Bildung von im Bereich der Plateauränder liegenden Kanten 8 konkav gewölbt ist.

Die Rinnen 4 besitzen einen V-förmigen Querschnitt und schliessen mit ihren Seitenflächen derart an die Kanten 8 an, dass diese Schabkanten bilden, die sich im Gegensatz zu den Schneidkanten bei bekannten Federringkonstruktionen beim Anziehvorgang nicht in die Druckübertragungsfläche eingraben, sondern diese lediglich Sauberschaben, so dass sich ein erhöhter Reibwert gegen Losdrehen ergibt.

Aufgrund der zick-zack-förmig verlaufenden wallartigen Erhebungen 3 und der dazwischen liegenden jeweils ebenfalls zick-zack-förmig verlaufenden Rinnen 4 ergeben sich im Vergleich mit genau radial verlaufenden wallartigen Erhebungen bekannter Federringkonstruktionen bei gleicher Breite grössere Schabkantenlängen in günstigerer Anordnung und damit ein erhöhter Widerstand gegen Losdrehen.

Wird ein Element der erfindungsgemässen Art im Zusammenwirken mit öl- bzw. wachsbeschichteten Gegenlagen eingesetzt, so füllen sich die Rinnen 4 beim Anziehvorgang mit Öl oder Wachs. Da die Rinnen 4 jedoch sowohl zum Innenrand 1 als auch zum Aussenrand 2 des Elementes offen sind, kann sich kein hydrostatischer Druck in den mit Öl bzw. Wachs gefüllten Rinnen aufbauen. Vielmehr wird überschüssige Öl- bzw. Wachsmenge, die nicht vom Rinnenquerschnitt aufgenommen werden kann, beim Anziehvorgang zur Innenfläche 6 und zur Umfangsfläche 5 ausgepresst. Mangels des entsprechenden hydrostatischen Druckes gelangt somit bei einem solchen Anwendungsfall kein Öl oder Wachs aus den Rinnen 4 heraus auf die plateauartige Oberseite 7 zwischen die Schabkanten 8. Vielmehr wird beim Festziehen Öl. bzw. Wachs abgeschabt und überschüssige Menge über die Rinnen 4 abgeführt. Im weiteren Verlauf wird die Gegenfläche durch die Schabkanten weiter gereinigt und eingeebnet und somit der Reibwert der Erhebungen und damit das Losdrehmoment erhöht.

## Patentansprüche

1. Mitverspanntes federndes oder nicht-federndes scheiben- oder ringförmiges Element mit auf jeder Seitenfläche angeordneten vom Innen- bis zum Aussenrand verlaufenden wallartigen Erhebungen und zwischen diesen liegenden Vertiefungen, wobei die Erhebungen eine plateauartige Oberseite aufweisen, deren Plateaufläche im Querschnitt in Umfangsrichtung des Elementes zur Bildung von im Bereich der Plateauränder liegenden Kanten konkav gewölbt ist, und die Kanten als Schabkanten ausgebildet sind, dadurch gekennzeichnet, dass sich die wallartigen Erhebungen (3) in radialer Richtung zick-zack-förmig vom Innenrand (1) zum Aussenrand (2) jeder Seitenfläche erstrecken und die zwischen den Erhebungen liegenden Vertiefungen jeweils als zick-zack-förmig verlaufende durchgehende Rinnen (4) ausgebildet sind, die im Bereich des Innen- und Aussenrandes offen sind.

2. Element nach Anspruch 1, dadurch gekennzeichnet, dass die zick-zack-förmig verlaufenden Rinnen (4) im Bereich des Aussenrandes (2) in die Umfangsfläche (5) und im Bereich des Innenrandes (1) in die Innenfläche (6) des Federringes hinein auslaufen.

3. Element nach Anspruch 1 oder 2, dadurch gekennzeichnet, dass – gemessen zwischen den Kanten (8) – die Breite der wallartigen Erhebungen (3) dem 0,5- bis 3-fachen der Breite der Rinnen (4) entspricht.

4. Element nach Anspruch 1 oder 2, dadurch gekennzeichnet, dass - gemessen zwischen den Kanten (8) - die Breite der wallartigen Erhebungen (3) der Breite der Rinnen (4) entspricht.

5. Element nach Anspruch 1, 2 oder 3, dadurch gekennzeichnet, dass die Rinnen (4) einen V-förmigen Querschnitt aufweisen.

## Claims

1. A self-locking resilient or non-resilient discoid or annular element, comprising: wall-like protrusions arranged on each major surface and extending from the inner to the outer boundary; and recesses lying between said protrusions, wherein said protrusions have a plateau-like upper surface, the plateau surface of which is concavely curved as viewed in cross-section along the circumferential direction of the element to form edges at sides of said upper surfaces and the edges are configured as scraping edges, characterised in that the wall-like protrusions (3) extend in the radial direction in zig-zag fashion from the inner boundary (1) to the outer boundary (2) of each major surface, and the recesses lying between said protrusions are respectively formed as zig-zag-shaped continuous channels (4) which are open in the region of the inner and outer boundary.

2. An element according to claim 1 characterised in that the zig-zag-shaped channels (4) intersect the outer edge surface (5) at the outer boundary (2) and the inner edge surface (6) at the inner boundary (1).

3. An element according to claim 1 or claim 2 characterised in that the width of the wall-like protrusions (3) – measured between the edges (8) – corresponds to 0.5 to 3 times the width of the channels (4).

4. An element according to claim 1 or 2 characterised the width of the wall-like protrusions (3) – measured between the edges (8) – corresponds to width of the channels (4).

5. An element according to claim 1, 2 or 3 characterised in that the channels (4) have a V-shaped cross-section.

**Revendications**

1. Elément en forme de rondelle ou d'anneau, élastique ou non-élastique, pour blocage du type entretoise, comportant des élévations en terrasse, disposées sur chaque face latérale et courant du bord intérieur vers le bord extérieur, et avec des renfoncements disposés entre ces élévations, les élévations présentant une face supérieure en plateau, dont la surface, en coupe dans le sens périphérique de l'élément, et pour former des arêtes situées dans la zone des bords du plateau, est incurvée d'une manière concave, les arêtes étant formées comme ces arêtes passives, caractérisé en ce que les élévations en terrasse (3) s'étendent dans le sens radial en zig-zag du bord intérieur (1) au bord extérieur (2) de chaque face latérale, et que les renforcements se trouvant entre les élévations sont chacun constitués de rainures continues (4) courant en zig-zag, et qui sont ouvertes dans la zone du bord intérieur et du bord extérieur.

2. Elément selon la revendication 1, caractérisé en ce que les rainures (4) courant en zig-zag arrivent jusqu'à la face périphérique (5) dans la zone du bord extérieur (2) et, dans la zone du bord intérieur (1), jusqu'à la face intérieure (6) de la rondelle-ressort.

3. Elément selon la revendication 1 ou 2, caractérisé en ce que la largeur des élévations en terrasse (3) – mesurée entre les arêtes (8) – correspond à 0,5 à 3 fois la largeur des rainures (4).

4. Elément selon la revendication 1 ou 2, caractérisé en ce que la largeur des élévations en terrasse (3) – mesurée entre les arêtes (8) – correspond à la largeur des rainures (4).

5. Elément selon la revendication 1, 2, ou 3, caractérisé en ce que les rainures (4) ont une section en V.

# FIG.1

# FIG.2

# FIG.3